(19) **Europäisches Patentamt**
**European Patent Office**
**Office européen des brevets**

(11) **EP 3 639 312 B1**

(12) **EUROPEAN PATENT SPECIFICATION**

(45) Date of publication and mention
of the grant of the patent:
**06.10.2021 Bulletin 2021/40**

(51) Int Cl.:
***H01M 4/62*** (2006.01)

(21) Application number: **18739992.8**

(86) International application number:
**PCT/US2018/037824**

(22) Date of filing: **15.06.2018**

(87) International publication number:
**WO 2018/232286 (20.12.2018 Gazette 2018/51)**

(54) **ELECTRODES AND BATTERIES CONTAINING DIFFERENT CARBON BLACK PARTICLES**

ELEKTRODEN UND BATTERIEN MIT VERSCHIEDENEN RUSSPARTIKELN

ÉLECTRODES ET BATTERIES CONTENANT DIFFÉRENTES PARTICULES DE NOIR DE CARBONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.06.2017 US 201762520138 P**

(43) Date of publication of application:
**22.04.2020 Bulletin 2020/17**

(73) Proprietor: **Cabot Corporation**
**Boston, MA 02210 (US)**

(72) Inventors:
• **DUPASQUIER, Aurelien L.**
**Billerica, Massachusetts 01821 (US)**

• **LAXTON, Peter B.**
**Billerica, Massachusetts 01821 (US)**
• **OLJACA, Miodrag**
**Billerica, Massachusetts 01821 (US)**
• **KORCHEV, Andriy**
**Billerica, Massachusetts 01821 (US)**

(74) Representative: **Grünecker Patent- und Rechtsanwälte PartG mbB Leopoldstraße 4 80802 München (DE)**

(56) References cited:
EP-A1- 1 125 754    EP-A1- 2 034 542
JP-A- 2002 083 588    US-A1- 2015 044 516
US-A1- 2017 098 817

**Description**

**CROSS REFERENCE TO RELATED APPLICATION**

This application claims priority to U.S. Provisional Patent Application No. 62/520,138, filed on June 15, 2017.

**FIELD OF THE INVENTION**

The invention relates to electrodes and batteries including different carbon black particles.

**BACKGROUND**

Lithium-ion batteries are commonly used electrical energy sources for a variety of applications, such as electronic devices and electric vehicles. A lithium-ion battery typically includes a negative electrode (e.g., graphite) and a positive electrode (described below) that allow lithium ions and electrons to move to and from the electrodes during charging and discharging. An electrolyte solution in contact with the electrodes provides a conductive medium in which the ions can move. To prevent direct reaction between the electrodes, an ion-permeable separator is used to physically and electrically isolate the electrodes. When the battery is used as an energy source for a device, electrical contact is made to the electrodes, allowing electrons to flow through the device to provide electrical power, and lithium ions to move through the electrolyte from one electrode to the other electrode.

The positive electrode typically includes a conductive current collector supporting a mixture (e.g., applied as a paste) having at least an electroactive material, a binder, and a conductive additive. The electroactive material, such as a lithium transition metal oxide, is capable of receiving and releasing lithium ions. The binder, such as polyvinylidene fluoride, is used to provide cohesion to the electroactive particles and adhesion to the current collector. Typically, since the electroactive material and the binder are electrically insulating or poorly conducting, the conductive additive (e.g., graphite and carbon black) is added to enhance the electronic conductivity of the electrode. Such electronic conductivity is desirable for the battery to perform well.

Documents JP2002083588, US2017098817 and EP2034542 disclose positive electrodes for lithium-ion batteries including two types of carbon black.

**SUMMARY**

In one aspect, the invention features electrodes and batteries including two or more different populations of carbon black particles. The populations of carbon black particles can differ as defined in claim 1.

Since the carbon black particles are generally not involved in electrochemical reactions that generate electrical energy, these particles can negatively affect certain performance characteristics of the battery since they effectively lower the amount of electroactive material that can be contained in the electrode. But by selecting carbon black particles that provide the electrode with a targeted electrical conductivity as efficiently as possible, the negative effects of the carbon black particles (e.g., to the electrode's capacity and energy density) can be reduced, and the performance of electrode and battery can be improved. Without being bound by theory, it is believed that the different populations of carbon black particles can enhance the overall performance of the electrode and the battery in which the electrode is used by enhancing different types of conductivities in an electrode.

More specifically, the different populations of carbon black particles are selected and used to enhance short-range conductivity and long-range conductivity in the electrode. Short-range conductivity refers to electronic conductivity among particles of electroactive material. Short-range conductivity is achieved by using carbon black particles to create conductive bridges or connection points between particles of electroactive material. In some embodiments, such bridges can be formed when the carbon black particles coat the particles of electroactive material. Carbon black particles that are suited to provide short-range conductivity include particles with low structures, and in certain embodiments, high surface areas; particles with relatively high surface energies to provide affinity to the particles of electroactive material; particles with relatively low densities; and/or particles with relatively low particle size distributions (e.g., relative to the size of the particles of electroactive material). Long-range conductivity refers to electronic conductivity between the particles of the electroactive material and the current collector. Carbon black particles that are suited to provide long-range conductivity include particles with high structures, and in certain embodiments, low surface areas; particles with relatively low surface energies to provide less affinity to the particles of electroactive material; particles with relatively high densities; and/or particles with relatively high particle size distributions (e.g., relative to the size of the particles of electroactive material).

By using a blend (e.g., physical admixture) of different populations of carbon black particles that can provide both short-range and long-range conductivities, conductive pathways can be created uniformly throughout the electrode.

As a result, the overall performance of the electrode and battery can be improved. Such improvements can be evidenced by higher energy densities and/or higher power capabilities, both of which are in increasing demand for applications such as electric vehicles and high-end electronic devices.

In another aspect, the invention features an electrode, including a first lithium ion-based electroactive material; first carbon black particles having a first oil absorption number; and second carbon black particles different from the first carbon black particles, the second carbon black particles having a second oil absorption number larger than the first oil absorption number.

Embodiments of one or more aspects may include one or more of the following features. The first carbon black particles have a first BET surface area, and the second carbon black particles have a second BET surface area smaller than the first BET surface area. The first oil absorption number ranges from 100 to 200 mL/100 g. The second oil absorption number ranges from 200 to 350 mL/100 g. The first carbon black particles have a first BET surface area ranging from 150 to 1500 $m^2$/g. The second carbon black particles have a second BET surface area ranging from 50 to 150 $m^2$/g. The first carbon black particles are present in a ratio of 1:10 to 10:1 relative to the second carbon black particles. The first and second carbon black particles are present in an amount of 0.5 to 10 wt%, relative to the lithium-ion based electroactive material. The first and second carbon black particles have a particle size distribution of 0.5 to 20 micrometers. The first and second carbon black particles have a bimodal particle size distribution. The first carbon black particles have a particle size distribution of 0.5 to 2 micrometers. The second carbon black particles have a particle size distribution of 2 to 20 micrometers. The first carbon black particles have a first surface energy, and the second carbon black particles have a second surface energy lower than the first surface energy. The first carbon black particles have a first surface energy ranging from 5 to 20 $mJ/m^2$, and the second carbon black particles have a second surface energy ranging from 0.1 to 5 $mJ/m^2$. The first carbon black particles have a first density, and the second carbon black particles have a second density higher than the first density. The first carbon black particles have a first density ranging from 0.05 to 0.2 $g/cm^3$, and the second carbon black particles have a second density ranging from 0.2 to 0.5 $g/cm^3$. The first lithium ion-based electroactive material has particle size distribution ranging from 0.1 to 20 micrometers. The electrode further includes a second lithium ion-based electroactive material, wherein the first lithium ion-based electroactive material has a particle size distribution of 1 micrometer $\leq D_{50} \leq$ 5 micrometers, and the second lithium ion-based electroactive material has a particle size distribution of 5 micrometers $< D_{50} \leq$ 15 micrometers. The electrode has a thickness ranging from 40 to 200 micrometers.

In another aspect, the invention features battery including embodiments of electrodes described herein.

In another aspect, the invention features an electrode, including a first lithium ion-based electroactive material; first carbon black particles having a first surface energy; and second carbon black particles different from the first carbon black particles, the second carbon black particles having a second surface energy smaller than the first surface energy.

Embodiments of one or more aspects may include one or more of the following features. The first carbon black particles have a first BET surface area, and the second carbon black particles have a second BET surface area smaller than the first BET surface area. The first surface energy ranges from 5 to 20 $mJ/m^2$. The second surface energy ranges from 0.1 to 5 $mJ/m^2$. The first carbon black particles have a first BET surface area ranging from 150 to 1500 $m^2$/g. The second carbon black particles have a second BET surface area ranging from 50 to 150 $m^2$/g. The first carbon black particles are present in a ratio of 1:10 to 10:1 relative to the second carbon black particles. The first and second carbon black particles are present in an amount of 0.5 to 10 wt%, relative to the lithium-ion based electroactive material. The first and second carbon black particles have a particle size distribution of 0.5 micrometer to 20 micrometers. The first and second carbon black particles have a bimodal particle size distribution. The first carbon black particles have a particle size distribution of 0.5 to 20 micrometers. The second carbon black particles have a particle size distribution of 2 to 20 micrometers. The first carbon black particles have a first density, and the second carbon black particles have a second density higher than the first density. The first carbon black particles have a first density ranging from 0.05 to 0.2 $g/cm^3$, and the second carbon black particles have a second density ranging from 0.2 to 0.5 $g/cm^3$. The first lithium ion-based electroactive material has particle size distribution ranging from 0.1 to 20 micrometers. The electrode further includes a second lithium ion-based electroactive material, wherein the first lithium ion-based electroactive material has a particle size distribution of 1 micrometer $\leq D_{50} \leq$ 5 micrometers, and the second lithium ion-based electroactive material has a particle size distribution of 5 micrometers $< D_{50} \leq$ 15 micrometers. The electrode has a thickness ranging from 40 micrometers to 200 micrometers.

In another aspect, the invention features an electrode, including a first lithium ion-based electroactive material; first carbon black particles having a first density; and second carbon black particles different from the first carbon black particles, the second carbon black particles having a second density larger than the first density.

Embodiments of one or more aspects may include one or more of the following features. The first carbon black particles have a first BET surface area, and the second carbon black particles have a second BET surface area smaller than the first BET surface area. The first density ranges from 0.05 to 0.2 $g/cm^3$. The second density ranges from 0.2 to 0.5 $g/cm^3$. The first carbon black particles have a first BET surface area ranging from 150 to 1500 $m^2$/g. The second carbon black particles have a second BET surface area ranging from 50 to 150 $m^2$/g. The first carbon black particles are present in a ratio of 1:10 to 10:1 relative to the second carbon black particles. The first and second carbon black particles are present in an amount of 0.5 to 10 wt%, relative to the lithium-ion based electroactive material. The first and second carbon black particles have a particle size distribution of 0.5 micrometer to 20 micrometers. The and second carbon black particles have a bimodal particle size distribution. The first carbon black particles have a particle size distribution of 0.5 to 2 micrometers. The second carbon black particles have a particle size distribution of 2 to 20 micrometers. The first lithium ion-based electroactive material has particle size distribution ranging from 0.1 to 20 micrometers. The electrode further includes a second lithium ion-based electroactive material, wherein the first lithium ion-based electroactive material has a particle size distribution of 1 micrometer $\leq D_{50} \leq$ 5 micrometers, and the second lithium ion-based electroactive material has a particle size distribution of 5 micrometers $< D_{50} \leq$ 15 micrometers. The electrode has a thickness ranging from 40 micrometers to 200 micrometers.

In another aspect, the invention features a method of making an electrode, according to claim 1.

Embodiments of one or more aspects may include one or more of the following features. The first carbon black particles have a first oil absorption number, and the second carbon black particles has a second oil absorption number larger than the first oil absorption number. The first carbon black particles have a first BET surface area, and the second carbon black particles have a second BET surface area smaller than the first BET surface area. The first carbon black particles have an oil absorption number ranging from 100 to 200 mL/100 g. The second carbon black particles have an oil absorption number ranging from 200 to 350 mL/g. The first carbon black particles have a first BET surface area ranging from 150 to 1500 m$^2$/g. The second carbon black particles have a second BET surface area ranging from 50 to 150 m$^2$/g. The first carbon black particles are present in a ratio of 1:10 to 10:1 relative to the second carbon black particles. The first and second carbon black particles are present in an amount of 0.5 to 10 wt%, relative to the lithium-ion based electroactive material. The first and second carbon black particles have a particle size distribution of 0.5 micrometer to 20 micrometers. The first and second carbon black particles have a bimodal particle size distribution. The first carbon black particles have a particle size distribution of 0.5 to 2 micrometers. The second carbon black particles have a particle size distribution of 2 to 20 micrometers. The first carbon black particles have a first surface energy, and the second carbon black particles have a second surface energy lower than the first surface energy. The first carbon black particles have a first surface energy ranging from 5 to 20 mJ/m$^2$, and the second carbon black particles have a second surface energy ranging from 0.1 to 5 mJ/m$^2$. The first carbon black particles have a first density, and the second carbon black particles have a second density higher than the first density. The first carbon black particles have a first density ranging from 0.05 to 0.2 g/cm$^3$, and the second carbon black particles have a second density ranging from 0.2 to 0.5 g/cm$^3$. The first lithium ion-based electroactive material has particle size distribution ranging from 0.1 to 20 micrometers. The method of further includes combining the first and second carbon black particles with a second lithium ion-based electroactive material, wherein the first lithium ion-based electroactive material has a particle size distribution of 1 micrometer $\leq D_{50} \leq$ 5 micrometers, and the second lithium ion-based electroactive material has a particle size distribution of 5 micrometers $< D_{50} \leq$ 15 micrometers. The electrode has a thickness ranging from 40 micrometers to 200 micrometers.

In another aspect, the invention features a composition, including first carbon black particles having a first level of dispersion, and second carbon black particles having a second level of dispersion lower than the first level of dispersion; and a solvent. An electrode and/or a battery can be made using the composition and various embodiments described herein.

Embodiments of one or more aspects may include one or more of the following features. The first carbon black particles have a first oil absorption number, and the second carbon black particles have a second oil absorption number larger than the first oil absorption number. The first carbon black particles have a first BET surface area, and the second carbon black particles have a second BET surface area smaller than the first BET surface area. The first carbon black particles have an oil absorption number ranging from 100 to 200 mL/100 g. The second carbon black particles have an oil absorption number ranging from 200 to 350 mL/g. The first carbon black particles have a first BET surface area ranging from 150 to 1500 m$^2$/g. The second carbon black particles have a second BET surface area ranging from 50 to 150 m$^2$/g. The first carbon black particles are present in a ratio of 1:10 to 10:1 relative to the second carbon black particles. The first and second carbon black particles are present in an amount of 0.5 to 10 wt%, relative to the lithium-ion based electroactive material. The first and second carbon black particles have a particle size distribution of 0.5 micrometer to 20 micrometers. The first and second carbon black particles have a bimodal particle size distribution. The first carbon black particles have a particle size distribution of 0.5 to 2 micrometers. The second carbon black particles have a particle size distribution of 2 to 20 micrometers. The first carbon black particles have a first surface energy, and the second carbon black particles have a second surface energy lower than the first surface energy. The first carbon black particles have a first surface energy ranging from 5 to 20 mJ/m$^2$, and the second carbon black particles have a second surface energy ranging from 0.1 to 5 mJ/m$^2$. The first carbon black particles have a first density, and the second carbon black particles have a second density higher than the first density. The first carbon black particles have a first density ranging from 0.05 to 0.2 g/cm$^3$, and the second carbon black particles have a second density ranging from 0.2 to 0.5 g/cm$^3$. The composition further includes a first lithium ion-based electroactive material. The first lithium ion-based electroactive material has particle size distribution ranging from 0.1 to 20 micrometers. The composition further includes a second lithium ion-based electroactive material, wherein the first lithium ion-based electroactive material has a particle size distribution of 1 micrometer $\leq$ Dso $\leq$ 5 micrometers, and the second lithium ion-based electroactive material has a particle size distribution of 5 micrometers < $D_{50}$ $\leq$ 15 micrometers. The first and second carbon black particles include the same carbon black particles dispersed at different levels of dispersion. The first and second carbon black particles include different carbon black particles. The solvent includes N-methylpyrrolidone.

Other aspects, features, and advantages of the invention will be apparent from the description of the embodiments thereof and from the claims.

## BRIEF DESCRIPTION OF THE DRAWINGS

FIG. 1 is a plot of particle size distributions of LITX® 200D additive and poly(vinyldifluoroethylene) (PVDF) slurries in N-methylpyrrolidone (NMP) prepared with three different mixing tools.

FIG. 2 is a plot of dried 96.5:2:1.5 nickel cobalt manganese oxide (NCM):carbon black (CB):PVDF electrode sheet resistances versus electrode densities coated from LITX® 200D additive and PVDF slurries in NMP prepared with three different mixing tools.

FIG. 3 is a plot of capacity versus discharge rate for 96.5:2:1.5 NCM:CB:PVDF electrodes in half coin-cells made from LITX® 200D additive and PVDF slurries in NMP prepared with three different mixing tools.

FIG. 4 is a plot of particle size distributions of LITX® 300 additive and PVDF slurries in NMP prepared with three different milled forms of LITX® 300 additives.

FIG. 5 is a plot of 3.3 g/cc compressed electrode sheet resistance as function of LITX® 300 additive milled form in 96.4:0.6:1 (lithium cobalt oxide (LCO):NCM 80:20):CB:PVDF electrodes.

FIG. 6 is a plot of capacity versus discharge rate for 96.4:0.6:1 (LCO:NCM 80:20):CB:PVDF electrodes in half coin-cells made from LITX® 300 additive and PVDF slurries in NMP prepared with three different milled forms of LITX® 300 additives.

FIG. 7 is a plot of particle size distributions of LITX® HP additives having different levels of dispersion in slurries, as described in Example 5.

FIG. 8 is a plot of sheet resistance of samples described in Example 5.

FIG. 9 is a plot showing cell performance at various discharge rates for selected samples described in Example 5.

FIG. 10 is a plot of particle size distributions of LITX® 200 additives having different levels of dispersion in slurries, as described in Example 6.

FIG. 11 is a plot of cathode resistance versus electrode density for samples described in Example 6.

FIG. 12 is a plot of capacity versus C-rate for samples described in Example 6.

## DETAILED DESCRIPTION OF THE EMBODIMENTS

Described below are electrodes and batteries having two or more populations of different carbon black particles, and methods of making the electrodes and batteries. At least one population of carbon black particles ("first carbon black particles") is selected and used to enhance short-range conductivity within the electrode, and at least another population of carbon black particles ("second carbon black particles") is selected and used to enhance long-range conductivity within the electrode.

To enhance short-range conductivity, the first carbon black particles are selected to have one or more properties, in any combination, that help to provide electronic connections between particles of electroactive material in the electrode. These properties include: relatively low structures, and in some embodiments, with relatively high surface areas; relatively high surface energies; relatively low densities; and/or particles with relatively low particle size distributions. In some embodiments, "relatively high" and "relatively low" are relative to the second carbon black particles described herein.

In some embodiments, the first carbon black particles have relatively low oil absorption numbers (OANs), which are indicative of the particles' relatively low structures, or volume-occupying properties. For a given mass, the low structure carbon blacks occupy less volume than other carbon blacks having higher structures. When used as a conductive additive in a battery electrode, carbon black particles having relatively low OANs can more effectively provide connections between particles of electroactive material (e.g., by coating particles of the electroactive material). In some embodiments, the carbon blacks have OANs ranging from 100 to 200 mL/100 g. The OANs can have or include, for example, one of the following ranges: from 100 to 190 mL/100g, or from 100 to 180 mL/100g, or from 100 to 170 mL/100g, or from 100 to 160 mL/100g, or from 100 to 150 mL/100g, or from 100 to 140 mL/100g, or from 100 to 130 mL/100g, or from 100 to 120 mL/100g, or from 110 to 200 mL/100g, or from 110 to 190 mL/100g, or from 110 to 180 mL/100g, or from 110 to 170 mL/100g, or from 110 to 160 mL/100g, or from 110 to 150 mL/100g, or from 110 to 140 mL/100g, or from 110 to 130 mL/100g, or from 120 to 200 mL/100g, or from 120 to 190 mL/100g, or from 120 to 180 mL/100g, or from 120 to 170 mL/100g, or from 120 to 160 mL/100g, or from 120 to 150 mL/100g, or from 120 to 140 mL/100g, or from 130 to 200 mL/100g, or from 130 to 190 mL/100g, or from 130 to 180 mL/100g, or from 130 to 170 mL/100g, or from 130 to 160 mL/100g, or from 130 to 150 mL/100g, or from 140 to 200 mL/100g, or from 140 to 190 mL/100g, or from 140 to 180 mL/100g, or from 140 to 170 mL/100g, or from 140 to 160 mL/100g, or from 150 to 200 mL/100g, or from 150 to 190 mL/100g, or from 150 to 180 mL/100g, or from 150 to 170 mL/100g, or from 160 to 200 mL/100g, or from 160 to 190 mL/100g, or from 160 to 180 mL/100g, or from 170 to 200 mL/100g, or from 170 to 190 mL/100g, or from 180 to 200 mL/100g. Other ranges within these ranges are possible. All OAN values disclosed herein are determined by the method described in ASTM D 2414-16, using epoxidized fatty acid ester (EFA) oil and Procedure B. The method of ASTM D 2414-13a is incorporated herein by reference. Examples of carbon black particles having relatively low structures are described in U.S. Patent No. 9,053,871, and include carbon blacks available from Cabot Corporation (Billerica, MA) under the LITX® (e.g., LITX® 200 carbon), PBX® (e.g., PBX® 09 carbon), VULCAN® XC, CSX-946, and SC2 product names.

In combination with having low structures, in certain embodiments, the first carbon black particles have relatively high Brunauer-Emmett-Teller (BET) total surface areas. Particles with higher surface areas can enhance the performance of the battery by allowing the particles to sufficiently contact (e.g., coat) the electroactive material particles and provide the desired electrode conductivity. In some embodiments, the carbon black particles have a BET surface area ranging from 150 to 1,500 m$^2$/g. The BET surface area can have or include, for example, one of the following ranges: from 150 to 1,300 m$^2$/g, or from 150 to 1,100 m$^2$/g, or from 150 to 900 m$^2$/g, or from 150 to 700 m$^2$/g, or from 150 to 500 m$^2$/g, or from 150 to 300 m$^2$/g, or from 350 to 1,500 m$^2$/g, or from 350 to 1,300 m$^2$/g, or from 350 to 1,100 m$^2$/g, or from 350 to 900 m$^2$/g, or from 350 to 700 m$^2$/g, or from 350 to 500 m$^2$/g, or from 550 to 1,500 m$^2$/g, or from 550 to 1,300 m$^2$/g, or from 550 to 1,100 m$^2$/g, or from 550 to 900 m$^2$/g, or from 550 to 700 m$^2$/g, or from 750 to 1,500 m$^2$/g, or from 750 to 1,300 m$^2$/g, or from 750 to 1,100 m$^2$/g, or from 750 to 900 m$^2$/g, or from 950 to 1,500 m$^2$/g, or from 950 to 1,300 m$^2$/g, or from 950 to 1,100 m$^2$/g, or from 1,050 to 1,500 m$^2$/g, or from 1,050 to 1,300 m$^2$/g, or from 1,150 to 1,500 m$^2$/g, or from 1,150 to 1,300 m$^2$/g, or from 1,350 to 1,500 m$^2$/g. Other ranges within these ranges are possible. All BET surface area values disclosed herein refer to "BET nitrogen surface area" and are determined by ASTM D6556-10, the entirety of which is incorporated herein by reference. Examples of carbon black particles having low structures and high surface areas are described in U.S. Patent No. 9,053,871, hereby incorporated by reference. Examples of carbon black particles having relatively high BET surface areas are described in U.S. Patent No. 9,053,871, and include carbon blacks available from Cabot Corporation (Billerica, MA) under the LITX® (e.g., LITX® 200 carbon), PBX® (e.g., PBX® 09 carbon), VULCAN® XC, CSX-946, BLACK PEARLS® (e.g., BLACK PEARL® 2000 carbon), and SC2 product names.

In some embodiments, the first carbon black particles have relatively high surface energies, in combination with low structure and/or high surface areas, or independently thereof. It is believed that having a high surface energy provides the first carbon black particles with an affinity to the particles of electroactive material, thereby allowing the carbon black particles to serve more effectively as connections between the particles of electroactive material. As used herein, surface energy is measured by Dynamic Vapor (Water) Sorption (DVS) or water spreading pressure (described below). In some embodiments, the carbon black has a surface energy (SE) ranging from 5 to 15 mJ/m$^2$. The surface energy can have or include, for example, one of the following ranges: from 5 to 13 mJ/m$^2$, or from 5 to 11 mJ/m$^2$, or from 5 to 9 mJ/m$^2$, or from 7 to 15 mJ/m$^2$, or from 7 to 13 mJ/m$^2$, or from 7 to 11 mJ/m$^2$, or from 9 to 15 mJ/m$^2$, or from 9 to 13 mJ/m$^2$, or from 11 to 15 mJ/m$^2$. Other ranges within these ranges are possible. Examples of carbon black particles having relatively high surface energies include carbon blacks available from Cabot Corporation (Billerica, MA) under the VULCAN® XC, CSX-946, and BLACK PEARLS® (e.g., BLACK PEARL® 2000 carbon) product names.

Water spreading pressure is a measure of the interaction energy between the surface of carbon black (which absorbs no water) and water vapor. The spreading pressure is measured by observing the mass increase of a sample as it adsorbs water from a controlled atmosphere. In the test, the relative humidity (RH) of the atmosphere around the sample is increased from 0% (pure nitrogen) to about 100% (water-saturated nitrogen). If the sample and atmosphere are always in equilibrium, the water spreading pressure ($\pi_e$) of the sample is defined as:

$$\pi_e = \frac{RT}{A} \int_{0}^{P_o} \Gamma \, dlnP$$

where R is the gas constant, T is the temperature, A is the BET surface area of the sample as described herein, $\Gamma$ is the amount of adsorbed water on the sample (converted to moles/gm), P is the partial pressure of water in the atmosphere, and $P_o$ is the saturation vapor pressure in the atmosphere. In practice, the equilibrium adsorption of water on the surface is measured at one or (preferably) several discrete partial pressures and the integral is estimated by the area under the curve.

The procedure for measuring the water spreading pressure is detailed in "Dynamic Vapor Sorption Using Water, Standard Operating Procedure", rev. Feb. 8, 2005 (incorporated in its entirety by reference herein), and is summarized here. Before analysis, 100 mg of the carbon black to be analyzed was dried in an oven at 125° C. for 30 minutes. After ensuring that the incubator in the Surface Measurement Systems DVS1 instrument (supplied by SMS Instruments, Monarch Beach, Calif.) had been stable at 25° C. for 2 hours, sample cups were loaded in both the sample and reference chambers. The target RH was set to 0% for 10 minutes to dry the cups and to establish a stable mass baseline. After discharging static and taring the balance, approximately 10-12 mg of carbon black was added to the cup in the sample chamber. After sealing the sample chamber, the sample was allowed to equilibrate at 0% RH. After equilibration, the initial mass of the sample was recorded. The relative humidity of the nitrogen atmosphere was then increased sequentially to levels of approximately 0, 5, 10, 20, 30, 40, 50, 60, 70, 80, 90, and 95% RH, with the system allowed to equilibrate for 20 minutes at each RH level. The mass of water adsorbed at each humidity level was recorded, from which water spreading pressure was calculated (see above). The measurement was done twice on two separate samples and the average value is reported

In some embodiments, the first carbon black particles have relatively low densities, in combination with low structure, high surface areas, and/or high surface energies, or independently thereof. It is believed that having a low density provides the first carbon black particles with short range conductivity. In some embodiments, the carbon black has a density ranging from 0.05 to 0.2 g/cm$^3$. The densities can have or include, for example, one of the following ranges: from 0.05 to 0.15 g/cm$^3$, or from 0.05 to 0.1 g/cm$^3$, or from 0.1 to 0.2 g/cm$^3$, or from 0.1 to 0.15 g/cm$^3$, or from 0.15 to 0.2 g/cm$^3$. Other ranges within these ranges are possible. As disclosed herein, density is determined by ASTM D7481-09. Examples of carbon black particles having relatively low densities include "fluffy" carbon black particles, such as carbon blacks available from Cabot Corporation under the LITX® (e.g., LITX® 200 carbon) and VULCAN® XC product names.

In other embodiments, the first carbon black particles have relatively low particle size distribution, as indicated by their $D_{50}$ values (also known as the "median diameter"), in combination with low structure, high surface areas, high surface energies, and/or low densities, or independently thereof. It is believed that having a low particle size distribution (e.g., relative to the particle size distribution of the particles of electroactive material) allows the first carbon black particles to more effectively coat the electroactive material particles. In some embodiments, the carbon black has a particle size distribution, as indicated by their Dso values, ranging from 0.5 to 2 micrometers. The particle size distributions can have or include, for example, one of the following ranges: from 0.5 to 1.75 micrometer, or from 0.5 to 1.5 micrometer, or from 0.5 to 1.25 micrometer, or from 0.5 to 1 micrometer, or from 0.5 to 0.75 micrometer, or from 0.75 to 2 micrometers, or from 0.75 to 1.75 micrometer, or from 0.75 to 1.5 micrometer, or from 0.75 to 1.25 micrometer, or from 0.75 to 1 micrometer, or from 1 to 2 micrometers, or from 1 to 1.75 micrometer, or from 1 to 1.5 micrometer, or from 1 to 1.25 micrometer, or from 1.25 to 2 micrometers, or from 1.25 to 1.75 micrometer, or from 1.25 to 1.5 micrometer, or from 1.5 to 2 micrometers, or from 1.5 to 1.75 micrometer, or from 1.75 to 2 micrometers. Other ranges within these ranges are possible. Particle size measurements were performed using a Horiba LA-950V2 Particle Size Analyzer and its accompanying software. Carbon black particles having a desired particle size distribution can be made, for example, by mixing, milling, and/or jet milling. Examples of carbon black particles having a relatively low particle size distribution include carbon blacks available from Cabot Corporation under the LITX® (e.g., LITX® 200 carbon) product name.

Turning now to the second carbon black particles, to enhance long-range conductivity, the second carbon black particles are selected to have one or more properties, in any combination, that help to provide electronic connections between particles of electroactive material in the electrode to the current collector. These properties include: relatively high structures, and in some embodiments, with relatively low surface areas; relatively low surface energies; relatively high densities; and/or relatively high particle size distributions. In some embodiments, "relatively high" and "relatively low" are relative to the first carbon black particles described herein.

In certain embodiments, the second carbon black particles have relatively high oil absorption numbers, which are indicative of the particles' relatively high structures, or volume-occupying properties. For a given mass, the high structure carbon blacks can extend further to occupy more volume than carbon blacks with lower structures. When used as a conductive additive in a battery electrode, carbon black particles having relatively high OANs can more effectively provide extended connections between particles of electroactive material and the current collector. In addition, carbon black particles with high structure branches can effectively retain electrolyte to more effectively fill in voids between electroactive material particles, thereby further enhancing ionic conductivity. In some embodiments, the second carbon black particles have OANs ranging from 200 to 350 mL/100 g. The OANs can have or include, for example, one of the following ranges: from 200 to 335 mL/100g, or from 200 to 320 mL/100g, or from 200 to 305 mL/100g, or from 200 to 290 mL/100g, or from 200 to 275 mL/100g, or from 200 to 260 mL/100g, or from 200 to 245 mL/100g, or from 200 to 230 mL/100g, or from 215 to 350 mL/100g, or from 215 to 335 mL/100g, or from 215 to 320 mL/100g, or from 215 to 305 mL/100g, or from 215 to 290 mL/100g, or from 215 to 275 mL/100g, or from 215 to 260 mL/100g, or form 215 to 245 mL/100g, or from 230 to 350 mL/100g, or from 230 to 335 mL/100g, or from 230 to 320 mL/100g, or from 230 to 305 mL/100g, or from 230 to 290 mL/100g, or from 230 to 275 mL/100g, or from 230 to 260 mL/100g, or from 245 to 350 mL/100g, or from 245 to 335 mL/100g, or from 245 to 320 mL/100g, or from 245 to 305 mL/100g, or from 245 to 290 mL/100g, or from 245 to 275 mL/100g, or from 260 to 350 mL/100g, or from 260 to 335 mL/100g, or from 260 to 320 mL/100g, or from 260 to 305 mL/100g, or from 260 to 290 mL/100g, or from 275 to 350 mL/100g, or from 275 to 335 mL/100g, or from 275 to 320 mL/100g, or from 275 to 305 mL/100g, or from 290 to 350 mL/100g, or from 290 to 335 mL/100g, or from 290 to 320 mL/100g, or from 305 to 350 mL/100g, or from 305 to 335 mL/100g, or from 320 to 350 mL/100g. Other ranges within these ranges are possible. Examples of carbon black particles having relatively high structures are described in U.S. Provisional Patent Application No. 63/332,142, filed on May 5, 2016, U.S. Patent Application No. 15/586,670, filed on May 4, 2017, and include carbon blacks available from Cabot Corporation under the LITX®, VULCAN® XC, and BLACK PEARLS® (e.g., BLACK PEARL® 2000 carbon) product names.

In combination with having high structures, in certain embodiments, the first carbon black particles have relatively low BET total surface areas. Without being bound by theory, it is believed that, during use of a battery, there are chemical side reactions that can occur within the battery that degrade its performance. Having particles with lower surface areas can enhance the performance of the battery by providing fewer surface sites where these unwanted side reactions can occur. However, the surface areas of the particles should be balanced, i.e., high enough, so that the particles can sufficiently cover the electroactive material and provide the desired electrode conductivity. In some embodiments, the carbon black particles have a BET surface area ranging from 50 to 150 $m^2$/g. The BET surface area can have or include, for example, one of the following ranges: from 50 to 140 $m^2$/g, or from 50 to 130 $m^2$/g, or from 50 to 120 $m^2$/g, or from 50 to 110 $m^2$/g, or from 50 to 100 $m^2$/g, or from 50 to 90 $m^2$/g, or from 50 to 80 $m^2$/g, or from 60 to 150 $m^2$/g, or from 60 to 140 $m^2$/g, or from 60 to 130 $m^2$/g, or from 60 to 120 $m^2$/g, or from 60 to 110 $m^2$/g, or from 60 to 100 $m^2$/g, or from 60 to 90 $m^2$/g, or from 70 to 150 $m^2$/g, or from 70 to 140 $m^2$/g, or from 70 to 130 $m^2$/g, or from 70 to 120 $m^2$/g, or from 70 to 110 $m^2$/g, or from 70 to 100 $m^2$/g, or from 80 to 150 $m^2$/g, or from 80 to 140 $m^2$/g, or from 80 to 130 $m^2$/g, or from 80 to 120 $m^2$/g, or from 80 to 110 $m^2$/g, or from 90 to 150 $m^2$/g, or from 90 to 140 $m^2$/g, or from 90 to 130 $m^2$/g, or from 90 to 120 $m^2$/g, or from 100 to 150 $m^2$/g, or from 100 to 140 $m^2$/g, or from 100 to 130 $m^2$/g, or from 110 to 150 $m^2$/g, or from 110 to 140 $m^2$/g, or from 120 to 150 $m^2$/g. Other ranges within these ranges are possible. Examples of carbon black particles having relatively low BET surface areas include carbon blacks available from Cabot Corporation under the LITX® product name (e.g., LITX® 50 carbon).

In certain embodiments, the second carbon black particles have relatively low surface energies, in combination with high structure and/or low surface areas, or independently thereof. It is believed that having a low surface energy provides the second carbon black particles with less affinity to the particles of electroactive material, and more affinity to other components of the electrode such as the binder, thereby allowing the second carbon black particles to serve as connections between the current collector and the particles of electroactive material. In some embodiments, the second carbon black particles have a surface energy less than or equal to 5 $mJ/m^2$, e.g., from the detection limit (about 2 $mJ/m^2$) to 5 $mJ/m^2$. The surface energy can have or include, for example, one of the following ranges: from the detection limit to 4 $mJ/m^2$, or from the detection limit to 3 $mJ/m^2$. In certain embodiments, the surface energy is less than 4 $mJ/m^2$, or less than 3 $mJ/m^2$, or at the detection limit. Other ranges within these ranges are possible. Examples of carbon black particles having relatively low surface energies are described in U.S. Patent No. 9,287,565, and include carbon blacks available from Cabot Corporation under the LITX® product name (e.g., LITX® 50 carbon).

In some embodiments, the second carbon black particles have relatively high densities, in combination with high structure, low surface areas, and/or low surface energies, or independently thereof. It is believed that having a high density provides the second carbon black particles with long range conductivity. In some embodiments, the carbon black has a density ranging from 0.2 to 0.5 $g/cm^3$. The densities can have or include, for example, one of the following ranges: from 0.2 to 0.45 $g/cm^3$, or from 0.2 to 0.4 $g/cm^3$, or from 0.2 to 0.35 $g/cm^3$, or from 0.2 to 0.3 $g/cm^3$, or from 0.25 to 0.5 $g/cm^3$, or from 0.25 to 0.45 $g/cm^3$, or from 0.25 to 0.4 $g/cm^3$, or from 0.25 to 0.35 $g/cm^3$, or from 0.3 to 0.5 $g/cm^3$, or from 0.3 to 0.45 $g/cm^3$, or from 0.3 to 0.4 $g/cm^3$, or from 0.35 to 0.5 $g/cm^3$, or from 0.35 to 0.45 $g/cm^3$, or from 0.4 to 0.5 $g/cm^3$. Other ranges within these ranges are possible. Examples of second carbon black particles having relatively high densities include "pelletized" carbon black particles, such as carbon blacks available from Cabot Corporation under the VULCAN® XC and CSX-946 product names.

In other embodiments, the second carbon black particles have relatively high particle size distribution, as indicated by their $D_{50}$ values, in combination with high structure, low surface areas, low surface energies, and/or high densities, or independently thereof. It is believed that having a high particle size distribution provides the second carbon black particles with long range conductivity. In some embodiments, the second carbon black particles have a particle size distribution, as indicated by their $D_{50}$ values, ranging from 2 to 20 micrometers. The particle size distributions can have or include, for example, one of the following ranges: from 2 to 18 micrometers, or from 2 to 16 micrometers, or from 2 to 14 micrometers, or from 2 to 12 micrometers, or from 2 to 10 micrometers, or from 2 to 8 micrometers, or from 4 to 20 micrometers, or from 4 to 18 micrometers, or from 4 to 16 micrometers, or from 4 to 14 micrometers, or from 4 to 12 micrometers, or from 4 to 10 micrometers, or from 6 to 20 micrometers, or from 6 to 18 micrometers, or from 6 to 16 micrometers, or from 6 to 14 micrometers, or from 6 to 12 micrometers, or from 8 to 20 micrometers, or from 8 to 18 micrometers, or from 8 to 16 micrometers, or from 8 to 14 micrometers, or from 10 to 20 micrometers, or from 10 to 18 micrometers, or from 10 to 16 micrometers, or from 12 to 20 micrometers, or from 12 to 18 micrometers, or from 14 to 20 micrometers. Other ranges within these ranges are possible. Examples of second carbon black particles having a relatively high particle size distribution include carbon blacks available from Cabot Corporation under the LITX® product name (e.g., LITX® 50 carbon).

Since the first and second carbon black particles have different particle size distributions (e.g., 0.5-2 micrometers and 2-20 micrometers), in some embodiments, their combined particle size distribution ranges from 0.5 to 20 micrometers and is bimodal, with two distinct peaks. The combined, bimodal particle size distribution can have or include, for example, one of the following ranges: from 0.5 to 18 micrometers, or from 0.5 to 16 micrometers, or from 0.5 to 14 micrometers, or from 0.5 to 12 micrometers, or from 0.5 to 10 micrometers, or from 0.5 to 8 micrometers, or from 0.5 to 6 micrometers, or from 2 to 20 micrometers, from 2 to 18 micrometers, or from 2 to 16 micrometers, or from 2 to 14 micrometers, or from 2 to 12 micrometers, or from 2 to 10 micrometers, or from 2 to 8 micrometers, or from 4 to 20 micrometers, or from 4 to 18 micrometers, or from 4 to 16 micrometers, or from 4 to 14 micrometers, or from 4 to 12 micrometers, or from 4 to 10 micrometers, or from 6 to 20 micrometers, or from 6 to 18 micrometers, or from 6 to 16 micrometers, or from 6 to 14 micrometers, or from 6 to 12 micrometers, or from 8 to 20 micrometers, or from 8 to 18 micrometers, or from 8 to 16 micrometers, or from 8 to 14 micrometers, or from 10 to 20 micrometers, or from 10 to 18 micrometers, or from 10 to 16 micrometers, or from 12 to 20 micrometers, or from 12 to 18 micrometers, or from 14 to 20 micrometers. Other ranges within these ranges are possible.

The first and second carbon black particles can be used in a variety of energy storage devices, such as batteries. As an example, a blend (e.g., a physical admixture) of the first and second carbon black particles can be used in an electrode (e.g., cathode) composition for a lithium-ion battery. The electrode composition typically includes a mixture of one or more electroactive materials, a binder, and a conductive aid (such as a blend of the first and second carbon black particles). As used herein, an "electroactive material" means a material capable of undergoing reversible, Faradaic and/or capacitive electrochemical reactions.

In some embodiments, the electroactive material includes one or more (e.g., two) lithium ion-based compounds. Exemplary electroactive materials include those selected from at least one of:

- $LiMPO_4$, wherein M represents one or more metals selected from Fe, Mn, Co, and Ni;
- $LiM'O_2$, wherein M' represents one or more metals selected from Ni, Mn, Co, Al, Mg, Ti, V, Cr, Fe, Zr, Ga, and Si;
- $Li(M'')_2O_4$, wherein M'' represents one or more metals selected from Ni, Mn, Co, Al, Mg, Ti, V, Cr, Fe, Zr, Ga, and Si (e.g., $Li[Mn(M'')]2O_4$); and
- $Li_{1+x}(Ni_yCo_{1-y-z}Mn_z)_{1-x}O_2$, wherein x ranges from 0 to 1, y ranges from 0 to 1 and z ranges from 0 to 1.

In certain embodiments, the electroactive material is selected from at least one of $LiNiO_2$; $LiNi_xAl_yO_2$ where x varies from 0.8-0.99, y varies from 0.01-0.2, and x+y=1; $LiCoO_2$ (LCO); $LiMn_2O_4$; $Li_2MnO_3$; $LiNi_{0.5}Mn_{1.5}O_4$; $LiFe_xMn_yCo_zPO_4$ where x varies from 0.01-1, y varies from 0.01-1, z varies from 0.01-0.2, and x+y+z=1; and $LiNi_{1-x-y}Mn_xCo_yO_2$, wherein x ranges from 0.01 to 0.99 and y ranges from 0.01 to 0.99.

In other embodiments, the electroactive material is selected from at least one of $Li_2MnO_3$; $LiNi_{1-x-y}Mn_xCo_yO_2$ wherein x ranges from 0.01 to 0.99 and y ranges from 0.01 to 0.99; $LiNi_{0.5}Mm_{1.5}O_4$; $Li_{1+x}(Ni_yCo_{1-y-z}Mn_z)_{1-x}O_2$ (NCM), wherein x ranges from 0 to 1, y ranges from 0 to 1 and z ranges from 0 to 1; and layer-layer compositions containing at least one of an $Li_2MnO_3$ phase and an $LiMn_2O_3$ phase.

In some embodiments, the electrode includes a mixture of active materials having a nickel-doped Mn spinel, and a layer-layer Mn rich composition. The nickel-doped Mn spinel can have the formula $LiNi_{0.5}Mn_{1.5}O_4$, and the layer-layer Mn rich composition can contain a $Li_2MnO_3$ or a $LiMn_2O_3$ phase, and mixtures thereof.

The concentration of electroactive material(s) in the electrode can vary, depending on the particular type of energy storage device. In some embodiments, the electroactive material is present in the cathode composition in an amount of at least 80% by weight, relative to the total weight of the composition, e.g., an amount of at least 90%, or an amount ranging from 80% to 99%, or an amount ranging from 90% to 99% by weight, relative to the total weight of the composition. The electroactive material is typically in the form of particles.

In some embodiments, the electroactive material comprises a mixture of two or more electroactive materials described herein (e.g., first and second electroactive materials). For example, the first electroactive material has a particle size distribution of 1 micrometer $\leq D_{50} \leq$ 5 micrometers, and the second electroactive material has a particle size distribution of 6 micrometers $\leq D_{50} \leq$ 15 micrometers. In another embodiment, the first electroactive material has a particle size distribution of 1 micrometer $\leq D_{50} \leq$ 5 micrometers, and the second electroactive material has a particle size distribution of 8 micrometers $\leq D_{50} \leq$ 15 micrometers. In another embodiment, the first electroactive material has a particle size distribution of 1 micrometer $\leq D_{50} \leq$ 5 micrometers, and the second electroactive material has a particle size distribution of 10 micrometers $\leq D_{50} \leq$ 15 micrometers. Electrodes and batteries having a mixture of two or more electroactive materials are described in U.S. Patent Application Publication No. 2014/0377659.

Typically, the electrode composition further includes one or more binders to enhance the mechanical properties of the formed electrode. Exemplary binder materials include, but are not limited to, fluorinated polymers such as poly(vinyldifluoroethylene) (PVDF), poly(vinyldifluoroethylene-co-hexafluoropropylene) (PVDF-HFP), poly(tetrafluoroethylene) (PTFE), polyimides, and water-soluble binders ,such as poly(ethylene) oxide, polyvinyl-alcohol (PVA), cellulose, carboxymethylcellulose (CMC), starch, hydroxypropylcellulose, regenerated cellulose, polyvinyl pyrrolidone (PVP), and copolymers and mixtures thereof. Other possible binders include polyethylene, polypropylene, ethylene-propylene-diene terpolymer (EPDM), sulfonated EPDM, styrenebutadiene rubber (SBR), and fluoro rubber and copolymers and mixtures thereof. In some embodiments, the binder is present in the electrode composition in an amount of 1 to 10 % by weight, relative to the total weight of the composition.

Like the concentrations of the electroactive material, the concentrations of the first and second carbon black particles can vary. In some embodiments, the total amount of carbon black particles can range from 0.5 to 10% by weight, relative to the electroactive material. The total amount of carbon black particles can have or include, for example, one of the following ranges: from 0.5 to 8% by weight, or from 0.5 to 6% by weight, or from 0.5 to 4% by weight, or from 0.5 to 2% by weight, or from 2 to 10% by weight, or from 2 to 8% by weight, or from 2 to 6% by weight, or from 2 to 4% by weight, or from 4 to 10% by weight, or from 4 to 8% by weight, or from 4 to 6% by weight, or from 6 to 10% by weight, or from 6 to 8% by weight, or from 8 to 10% by weight. Other ranges within these ranges are possible. Relative to each other, the first carbon black particles can be present in a ratio of 1:10 to 10:1, by weight, relative to the second carbon black particles. The ratio of first carbon black particles to second carbon black particles can have or include, for example, one of the following ranges, by weight: from 1:10 to 8:1, or from 1:10 to 6:1, or from 1:10 to 4:1, or from 3:10 to 10:1, or from 3:10 to 8:1, or from 3:1 to 6:1, or from 5:1 to 10:1, or from 5:1 to 8:1, or from 7:1 to 10:1. Other ranges within these ranges are possible. In certain embodiments with electroactive material particles having small particle size distributions, more of the first carbon black particles is used to connect the electroactive material particles.

An electrode (e.g., cathode) composition can be made by homogeneously interspersing (e.g., by uniformly mixing) the first and second carbon black particles with the one or more electroactive materials. In some embodiments, the binder is also homogeneously interspersed with the carbon black particles and electroactive material(s). The electrode composition can take the form of a paste or a slurry, in which particulate electroactive material(s), carbon black particles, and binder (if present) are combined in the presence of one or more solvents. Exemplary solvents include, e.g., N-methylpyrrolidone (NMP), acetone, alcohols, and water. The components of the electrode composition can be combined in the solvent in any order so long as the resulting mixture is substantially homogeneous, which can be achieved by shaking, stirring, etc. In certain embodiments, the electrode composition is a solid resulting from solvent removal from the paste or slurry.

In other embodiments, the electrode composition is made using a method having two dispersion steps to produce carbon black particles with different particle size distributions. For example, using high energies/speeds (e.g., using a SPEX® 8000M mixer/mill), starting carbon black particles can be highly dispersed to produce the first carbon black particles having a low particle size distribution. Subsequently, more starting carbon black particles can be added to the produced first carbon black particles, and dispersed using lower energies/speeds (e.g., using a mixer/mill from Thinky Corporation) to produce the second carbon black particles having a high particle size distribution and a low level of dispersion. The starting carbon black particles can be any of the carbon black particles described herein, and this two-step dispersion process can be used to further provide the starting carbon black particles with different particle size distributions, or levels of dispersion. The first and second carbon black particles can the same initial carbon black particles, or the first and second carbon black particles can be different initial carbon black particles. For example, the carbon black particles having different levels of dispersion can be of the same type and/or grade (e.g., both LITX® HP carbons) having the same BET surface area, oil absorption number, surface energy, density, etc. In other embodiments, the carbon black particles having different levels of dispersion can be of different types and/or grade (e.g., LITX® HP carbon and VULCAN® carbon), having one or more different properties (e.g., BET surface areas, oil absorption numbers, surface energies, densities, etc). The binder and the electroactive material(s) can then be added to the mixture of carbon black particles as described above. In other embodiments, the starting carbon black particles can be dispersed to different levels in separate batches, and the batches can be subsequently combined.

In various embodiments, the electrode composition, electrode and/or battery is made using a conductive additive composition (e.g., a slurry, a dispersion, a paste) containing the first and second carbon particles, such as those particles having different levels of dispersion. The conductive additive composition typically contains a solvent, such as NMP. The conductive additive composition provides an ease of handling (e.g., less dust) and processing (e.g., conveyance, metering) during manufacturing.

In some embodiments, an electrode is formed by depositing the paste onto an electrically conducting substrate (e.g., an aluminum current collector), followed by removing the solvent. In certain embodiments, the paste has a sufficiently high solids loading to enable deposition onto the substrate while minimizing the formation of inherent defects (e.g., cracking) that may result with a less viscous paste (e.g., having a lower solids loading). Moreover, a higher solids loading reduces the amount of solvent needed. The solvent is removed by drying the paste, either at ambient temperature or under low heat conditions, e.g., temperatures ranging from 20° to 100°C. The deposited cathode/current collector can be cut to the desired dimensions, optionally followed by calendering. In some embodiments, the finished electrode has a thickness ranging from 40 to 200 micrometers.

The formed electrode can be incorporated into a lithium-ion battery according to methods known in the art, for example, as described in "Lithium Ion Batteries Fundamentals and Applications", by Yuping Wu, CRC press, (2015).

In other embodiments, the high structure carbon black particles are used (e.g., incorporated) in electrodes of other energy storage devices, such as, primary alkaline batteries, primary lithium batteries, nickel metal hydride batteries, sodium batteries, lithium sulfur batteries, lithium air batteries, and supercapacitors. Methods of making such devices are known in the art and are described, for example, in "Battery Reference Book", by TR Crompton, Newness (2000).

**EXAMPLES**

**Example 1**

Slurry millbases were prepared by mixing a 4:3 by weight ratio LITX® 200D carbon black (BET surface area of 97 $m^2$/g and oil adsorption number (OAN) of 157 g/100mL from Cabot Corporation) and PVDF (Arkema, Kynar® HSV 900) at 10 wt.% solids, at three levels of dispersion by using three different mixing tools/mixers.

**Table 1**

| Dispersion mixer | Mixing time | Dispersion level | Particle size distribution |
|---|---|---|---|
| Thinky ARE310 | 20 min | Low | Bi-modal > 1 μ |
| Spex Mill 8000 | 30 min | Medium | Unimodal > 1 μ |
| Minicer | 30 min | High | Unimodal < 1 μ |

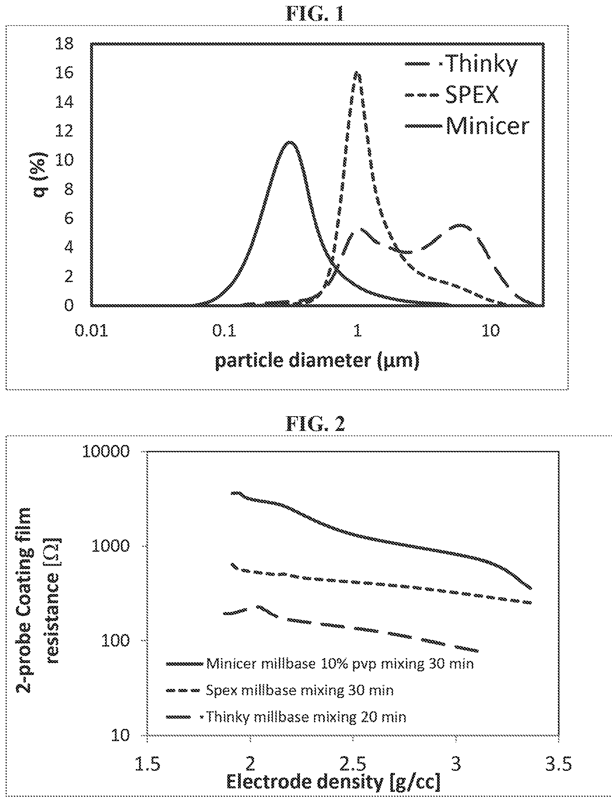

Particle size measurements were performed using a Horiba LA-950V2 Particle Size Analyzer. The resulting particle size distributions of the carbon black and PVDF millbase slurries are shown on FIG. 1.

As-prepared millbases were used to prepare Li-ion cathodes in the formulation NCM: CB: PVDF 96.5:2:1.5 by weight at slurry solids loading of 70 wt.%. The NCM was NCM 111 (Toda Co.), and was mixed to the millbase slurries using the Thinky ARE310 mixer for 20 minutes.

The electrode slurries were coated on aluminum foils using an automated doctor blade coater (Model MSK-AFA-III from MTI Corp.). The NMP was evaporated for 20 minutes in a convection oven set at 80°C. Electrodes pastes were coated at dry electrode loading of 10 mg/ and calendered to a density of 2.5 g/cc with a manual roll press.

Sheet resistance of coated electrodes was measured with a Lucas Lab 302 four-probe stand and an SP4 probe head connected to the rear of a Keithley 2410C source meter. Measurements were performed in a two-wire configuration mode because it was found that four-wire measurements led to a strong contribution of substrate conductivity. The reported values are direct ohm readings from the instrument, at a current of 0.1 mA, and a cathode calendered density of 2.5 g/cc. Results shown on FIG. 2 indicate a strong impact of the slurry mixing method, with best conductivity achieved at the lowest dispersion level, bi-modal with $D_{50}$ larger than 1 micron prepared with the Thinky planetary mixer.

**Example 2**

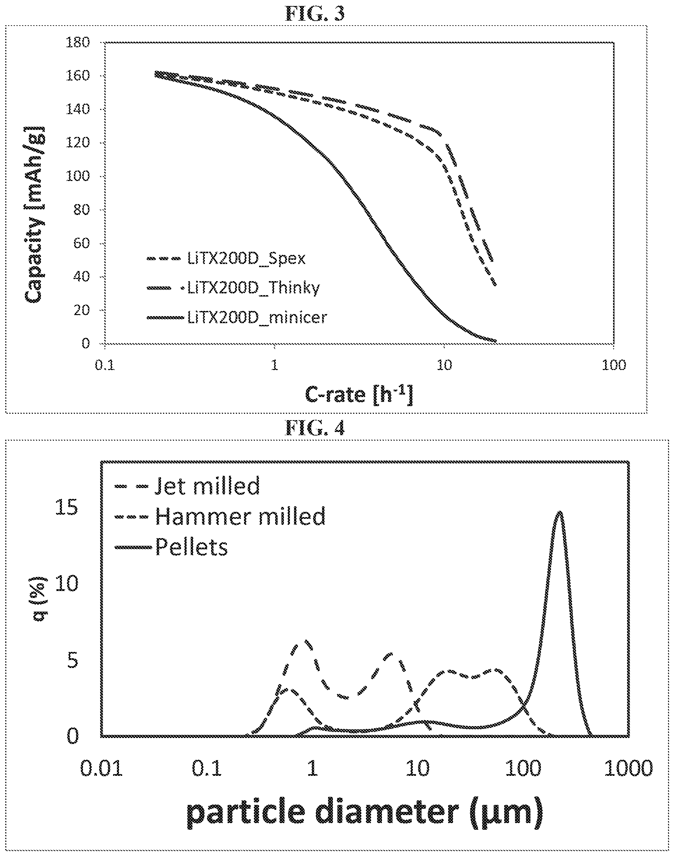

The cathodes of Example 1 were tested in 2032 coin cells half-cells. Fifteen-millimeter in diameter discs were punched for coin-cell preparation and dried at 110°C under vacuum for a minimum of 4 hours. Discs were calendered at 2.5g/cc with a manual roll press, and assembled into 2032 coin-cells in an argon-filled glove box (M-Braun) for testing against lithium foil. Glass fiber micro filters (Whatman GF/A) were used as separators. The electrolyte was 100 microliters of ethylene carbonate-dimethyl carbonate-ethylmethyl carbonate (EC-DMC-EMC), vinylene carbonate (VC) 1%, $LiPF_6$ 1M (BASF). Four coin-cells were assembled for each formulation tested. Reported capacities are averages of the four coin-cells, normalized in mAh/g of active cathode mass. The results shown in FIG. 3 confirm the trend observed with the sheet resistance of electrodes: best capacity retention vs. discharge rate was achieved with the electrodes having the lowest level of carbon dispersion, prepared with the Thinky planetary mixer.

**Example 3**

LITX® 300 carbon black (BET surface area of 169 $m^2$/g and oil adsorption number (OAN) of 154 g/100mL from Cabot Corporation) was used in three powder forms: pellets, hammer milled and jet milled. Those carbon blacks were dispersed in millbases with PVDF in NMP, with a CB:PVDF weight ratio of 0.6:1 and 10 wt.% total solids. The millbase dispersion was prepared with a Thinky ARE310 planetary mixer, at 2000 rpm for 20 minutes. Particle size measurements were performed using a Horiba LA-950V2 Particle Size Analyzer. As shown on FIG. 4, the pellets had the largest particle size, the hammer milled had intermediate particle size, and the jet milled sample had the smallest particle size.

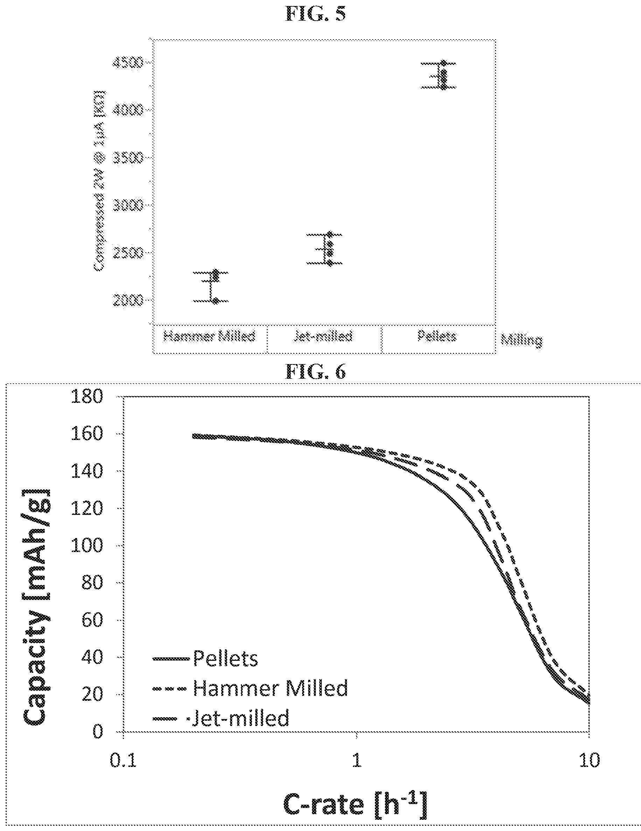

The millbases were used to prepare Li-ion cathodes at 98.4:0.6:1 Li-ion active material: CB: PVDF, where the active material was an 80:20 blend of LCO (Umicore) and NCM (Toda), coated on Al foil at 20 mg/cm$^2$ and calendered at density of 3.3 g/cc. Millbases and active cathode particles were mixed with the Thinky ARE310 planetary mixer, at 2000 rpm for 20 minutes. Sheet resistance of the dried electrodes, measured as described in Example 1, indicated that lowest electrode sheet resistance was achieved with the hammer milled samples, i.e. the intermediate dispersion level, while the best dispersion level (jet milled sample) had a higher sheet resistance (FIG. 5).

**Example 4**

The cathodes of Example 3 were tested in 2032 coin cells half-cells, using the same procedures as described in Example 2. The results shown on FIG. 6 confirm the trend observed with the sheet resistance of electrodes: best capacity retention vs. discharge rate was achieved with the electrodes having the intermediate level of carbon dispersion, prepared from hammer milled carbon black.

**Example 5** (according to the invention)

LITX® HP carbon black (BET surface area of 95 m$^2$/g and oil adsorption number (OAN) of 245 g/100mL from Cabot Corporation) was used to prepare a 10wt% solids mill base by four different methods listed in Table 2.

**Table 2**

| Dispersion tool, time | Dispersant | Dispersion level | Sample |
|---|---|---|---|
| Minicer, 90 min | 1% PVP | High | A |
| Minicer, 30 min | 1% PVP | Medium high | B |
| Spex Mill 8000, 30 min | 1% PVP | Medium | C |
| Thinky ARE310, 12 min | N/A | Low | D |

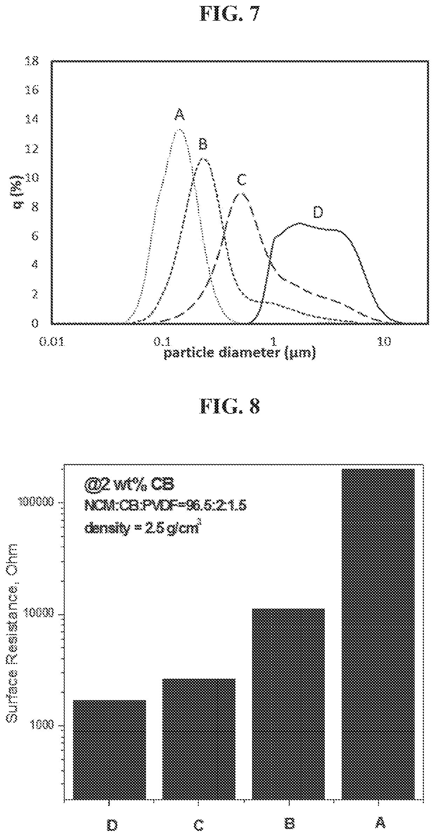

Particle size measurements were performed using a Horiba LA-950V2 Particle Size Analyzer. As shown on FIG. 7, all distributions were bimodal, except for Sample A which was most dispersed and unimodal. The above described millbases were used to prepare cathode slurries with Spex mill tool (30 min mixing time) and 70wt% total solids after NCM addition. Slurries were used to coat NCM electrodes formulated as NCM 111: CB: PVDF 96.5:2:1.5 at area loading of 10 mg/cm$^2$ and calendered at 2.5 g/cc.

Sheet resistance of the dried electrodes, measured as described in Example 1, indicated that lowest electrode sheet resistance was achieved with Sample D, and higher levels of dispersion caused higher electrode sheet resistance (FIG. 8). It is believed that this is clear indication that long range conductivity provided by the higher diameter fraction of the particle size distribution provides high electrode conductivity.

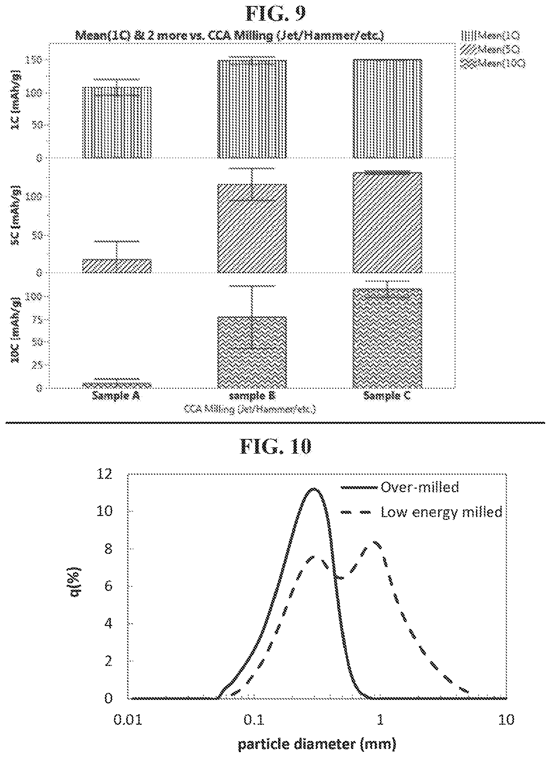

The cathodes from Samples A, B, and C were tested into 2032 coin cells half-cells, using the same procedures as described in Example 2. The results shown on FIG. 9 confirm the trend observed with the sheet resistance of electrodes: Samples B and C, which have bi-modal dispersion of the carbon black delivered higher specific capacity of the electrodes, and the benefit increased significantly at higher discharge rates of 5C (12 min discharge) and 10C (6 min).

**Example 6** (according to the invention)

Cathode slurries were prepared first by pre-dispersing LITX® 200 carbon black in N-methyl-2-pyrrolidone (NMP). This pre-dispersion was carried out at 20wt% carbon black with 1wt% dispersant using a lab scale media mill (Netzsch MiniCer). Two samples were compared where the milling energy was varied so that there is a comparison of high milling energy and low milling energy samples. With high milling energy, the LITX®200 carbon black was milled to a small mono-modal particle size with $d_{50} \sim 0.4$ micron. With lower milling energy, the particle size was bi-modal with one peak around 0.4 micron and a second peak near 1 micron, as shown in FIG. 10.

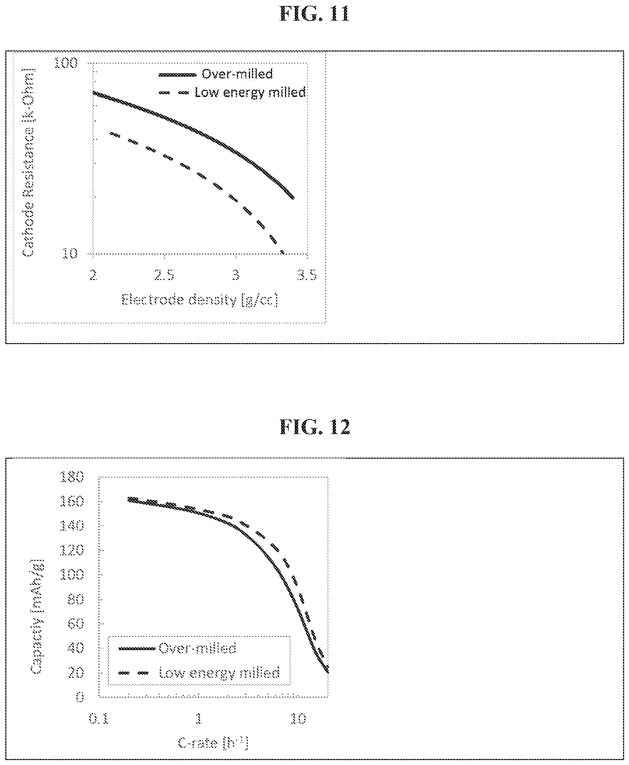

The millbases with the two distinct particle size distributions were then mixed with lithium containing active material, NCM 111, so that when coated on aluminum foil and dried the cathode contained 96.5wt% NCM 111, 2wt% LITX® 200 conductive additive, and 1.5wt% PVDF at an active loading of 10 mg/cm$^2$. After drying, the sheet resistance of the cathode was measured, then the cathode was compressed, and this process was repeated so that sheet resistance at a range of cathode densities was measured as shown in FIG. 11. The over-milled sample with mono-modal particle size distribution resulted in a cathode with higher electrical resistance than the cathode made with the material showing the bi-modal distribution. This higher resistance causes reduced capacity, especially at high Crates, in coin-cells made with these cathodes compressed to 2.8 g/cm$^3$ density (FIG. 12).

The use of the terms "a" and "an" and "the" is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Other embodiments of the present invention will be apparent to those skilled in the art from consideration of the present specification and practice of the present invention disclosed herein. It is intended that the present specification and examples be considered as exemplary only with a true scope of the invention being indicated by the following claims and equivalents thereof.

**Claims**

1. A method of making an electrode, comprising:

    combining a first lithium ion-based electroactive material with first and second carbon black particles, the first carbon black particles having a first level of dispersion, and the second carbon black particles having a second level of dispersion lower than the first level of dispersion
    wherein the first and second carbon black particles have a bimodal particle size distribution.

2. The method of claim 1, wherein the first carbon black particles have a first oil absorption number, and the second carbon black particles have a second oil absorption number larger than the first oil absorption number.

3. The method of claim 1 of 2, wherein the first carbon black particles have a first BET surface area, and the second carbon black particles have a second BET surface area smaller than the first BET surface area.

4. The method of any one of the previous claims, wherein the first carbon black particles have an oil absorption number ranging from 100 to 200 mL/100 g and/or the second carbon black particles have an oil absorption number ranging from 200 to 350 mL/g.

5. The method of any one of the previous claims, wherein the first carbon black particles have a first BET surface area ranging from 150 to 1500 m$^2$/g and/or the second carbon black particles have a second BET surface area ranging from 50 to 150 m$^2$/g.

6. The method of any one of the previous claims, wherein the first carbon black particles are present in a ratio of 1:10 to 10:1 relative to the second carbon black particles.

7. The method of any one of the previous claims, wherein the first and second carbon black particles are present in an amount of 0.5 to 10 wt%, relative to the lithium ion-based electroactive material.

8. The method of any one of the previous claims, wherein the first and second carbon black particles have a particle size distribution of 0.5 micrometers to 20 micrometers.

9. The method of any one of the previous claims, wherein the first carbon black particles have a particle size distribution of 0.5 micrometer to 2 micrometers and/or the second carbon black particles have a particle size distribution of 2 to 20 micrometers.

10. The method of any one of the previous claims, wherein the first carbon black particles have a first surface energy, and the second carbon black particles have a second surface energy lower than the first surface energy.

11. The method of any one of the previous claims, wherein the first carbon black particles have a first density, and the second carbon black particles have a second density higher than the first density.

12. The method of any one of the previous claims, further comprising combining the first and second carbon black particles with a second lithium ion-based electroactive material, wherein the first lithium ion-based electroactive material has a particle size distribution of 1 micrometer $\leq D_{50} \leq$ 5 micrometers, and the second lithium ion-based electroactive material has a particle size distribution of 5 micrometers $\leq D_{50} \leq$ 15 micrometers.

13. The method of any one of the previous claims, wherein the first and second carbon black particles comprise the same carbon black particles dispersed at different levels of dispersion.

14. The method of any one of the previous claims, wherein the first and second carbon black particles comprise different carbon black particles.

15. A battery, comprising an electrode made by the method of any one of the previous claims.

**Patentansprüche**

1. Verfahren zur Herstellung einer Elektrode, umfassend:

   Kombinieren eines ersten elektroaktiven Materials auf Lithiumionenbasis mit ersten und zweiten Rußpartikeln, wobei die ersten Rußpartikel einen ersten Dispersionsgrad besitzen und die zweiten Rußpartikel einen zweiten Dispersionsgrad besitzen, der niedriger ist als der erste Dispersionsgrad
   wobei die ersten und zweiten Rußpartikel eine bimodale Partikelgrößenverteilung besitzen.

2. Verfahren nach Anspruch 1, wobei die ersten Rußpartikel eine erste Ölabsorptionszahl besitzen und die zweiten Rußpartikel eine zweite Ölabsorptionszahl besitzen, die größer ist als die erste Ölabsorptionszahl.

3. Verfahren nach Anspruch 1 oder 2, wobei die ersten Rußpartikel eine erste BET-Oberfläche besitzen und die zweiten Rußpartikel eine zweite BET-Oberfläche besitzen, die kleiner ist als die erste BET-Oberfläche.

4. Verfahren nach einem der vorhergehenden Ansprüche, wobei die ersten Rußpartikel eine Ölabsorptionszahl im Bereich von 100 bis 200 mL/100 g besitzen und/oder die zweiten Rußpartikel eine Ölabsorptionszahl im Bereich von 200 bis 350 mL/g besitzen.

5. Verfahren nach einem der vorhergehenden Ansprüche, wobei die ersten Rußpartikel eine erste BET-Oberfläche im Bereich von 150 bis 1500 $m^2$/g besitzen und/oder die zweiten Rußpartikel eine zweite BET-Oberfläche im Bereich von 50 bis 150 $m^2$/g besitzen.

6. Verfahren nach einem der vorhergehenden Ansprüche, wobei die ersten Rußpartikel in einem Verhältnis von 1:10 bis 10:1 bezogen auf die zweiten Rußpartikel vorhanden sind.

7. Verfahren nach einem der vorhergehenden Ansprüche, wobei die ersten und zweiten Rußpartikel in einer Menge von 0,5 bis 10 Gew.-%, bezogen auf das elektroaktive Material auf Lithiumionenbasis, vorhanden sind.

8. Verfahren nach einem der vorhergehenden Ansprüche, wobei die ersten und zweiten Rußpartikel eine Partikelgrößenverteilung von 0,5 Mikrometer bis 20 Mikrometer besitzen.

9. Verfahren nach einem der vorhergehenden Ansprüche, wobei die ersten Rußpartikel eine Partikelgrößenverteilung von 0,5 Mikrometer bis 2 Mikrometer besitzen und/oder die zweiten Rußpartikel eine Partikelgrößenverteilung von 2 bis 20 Mikrometer besitzen.

10. Verfahren nach einem der vorhergehenden Ansprüche, wobei die ersten Rußpartikel eine erste Oberflächenenergie besitzen und die zweiten Rußpartikel eine zweite Oberflächenenergie besitzen, die niedriger ist als die erste Oberflächenenergie.

11. Verfahren nach einem der vorhergehenden Ansprüche, wobei die ersten Rußpartikel eine erste Dichte besitzen und die zweiten Rußpartikel eine zweite Dichte besitzen, die höher ist als die erste Dichte.

**12.** Verfahren nach einem der vorhergehenden Ansprüche, ferner umfassend das Kombinieren der ersten und zweiten Rußpartikel mit einem zweiten elektroaktiven Material auf Lithiumionenbasis, wobei das erste elektroaktive Material auf Lithiumionenbasis eine Partikelgrößenverteilung von 1 Mikrometer $\leq$ D50 $\leq$ 5 Mikrometer besitzt und das zweite elektroaktive Material auf Lithiumionenbasis eine Partikelgrößenverteilung von 5 Mikrometer < D50 $\leq$ 15 Mikrometer besitzt.

**13.** Verfahren nach einem der vorhergehenden Ansprüche, wobei die ersten und zweiten Rußpartikel die gleichen Rußpartikel umfassen, die in unterschiedlichen Dispersionsgraden dispergiert sind.

**14.** Verfahren nach einem der vorhergehenden Ansprüche, wobei die ersten und zweiten Rußpartikel unterschiedliche Rußpartikel umfassen.

**15.** Batterie, umfassend eine Elektrode, hergestellt nach dem Verfahren nach einem der vorhergehenden Ansprüche.

## Revendications

**1.** Procédé de fabrication d'une électrode, comprenant :

la combinaison d'un premier matériau électroactif à base d'ions lithium avec des premières et secondes particules de noir de carbone, les premières particules de noir de carbone ayant un premier niveau de dispersion, et les secondes particules de noir de carbone ayant un second niveau de dispersion inférieur au premier niveau de dispersion
dans lequel les premières et secondes particules de noir de carbone ont une distribution de taille de particule bimodale.

**2.** Procédé selon la revendication 1, dans lequel les premières particules de noir de carbone ont un premier indice d'absorption d'huile, et les secondes particules de noir de carbone ont un second indice d'absorption d'huile supérieur au premier indice d'absorption d'huile.

**3.** Procédé selon la revendication 1 ou 2, dans lequel les premières particules de noir de carbone ont une première surface spécifique BET, et les secondes particules de noir de carbone ont une seconde surface spécifique BET inférieure à la première surface spécifique BET.

**4.** Procédé selon l'une quelconque des revendications précédentes, dans lequel les premières particules de noir de carbone ont un indice d'absorption d'huile dans la plage de 100 à 200 ml/100 g et/ou les secondes particules de noir de carbone ont un indice d'absorption d'huile dans la plage de 200 à 350 ml/g.

**5.** Procédé selon l'une quelconque des revendications précédentes, dans lequel les premières particules de noir de carbone ont une première surface spécifique BET dans la plage de 150 à 1 500 m$^2$/g et/ou les secondes particules de noir de carbone ont une seconde surface spécifique BET dans la plage de 50 à 150 m$^2$/g.

**6.** Procédé selon l'une quelconque des revendications précédentes, dans lequel les premières particules de noir de carbone sont présentes selon un rapport de 1:10 à 10:1 par rapport aux secondes particules de noir de carbone.

**7.** Procédé selon l'une quelconque des revendications précédentes, dans lequel les premières et secondes particules de noir de carbone sont présentes selon une quantité de 0,5 à 10 % en poids, par rapport au matériau électroactif à base d'ions lithium.

**8.** Procédé selon l'une quelconque des revendications précédentes, dans lequel les premières et secondes particules de noir de carbone ont une distribution de taille de particule de 0,5 micromètre à 20 micromètres.

**9.** Procédé selon l'une quelconque des revendications précédentes, dans lequel les premières particules de noir de carbone ont une distribution de taille de particule de 0,5 micromètre à 2 micromètres et/ou les secondes particules de noir de carbone ont une distribution de taille de particule de 2 à 20 micromètres.

**10.** Procédé selon l'une quelconque des revendications précédentes, dans lequel les premières particules de noir de carbone ont une première énergie de surface, et les secondes particules de noir de carbone ont une seconde énergie de surface inférieure à la première énergie de surface.

11. Procédé selon l'une quelconque des revendications précédentes, dans lequel les premières particules de noir de carbone ont une première densité, et les secondes particules de noir de carbone ont une seconde densité supérieure à la première densité.

12. Procédé selon l'une quelconque des revendications précédentes, comprenant en outre la combinaison des premières et secondes particules de noir de carbone avec un second matériau électroactif à base d'ions de lithium, dans lequel le premier matériau électroactif à base d'ions de lithium a une distribution de taille de particule de 1 micromètre $\leq D_{50} \leq 5$ micromètres, et le second matériau électroactif à base d'ions de lithium a une distribution de taille de particule de 5 micromètres $\leq D_{50} \leq 15$ micromètres.

13. Procédé selon l'une quelconque des revendications précédentes, dans lequel les premières et secondes particules de noir de carbone comprennent les mêmes particules de noir de carbone dispersées à des niveaux de dispersion différents.

14. Procédé selon l'une quelconque des revendications précédentes, dans lequel les premières et secondes particules de noir de carbone comprennent des particules de noir de carbone différentes.

15. Batterie, comprenant une électrode fabriquée par le procédé selon l'une quelconque des revendications précédentes.

## FIG. 1

## FIG. 2

FIG. 3

FIG. 4

**FIG. 5**

**FIG. 6**

## FIG. 7

## FIG. 8

## FIG. 9

Mean(1C) & 2 more vs. CCA Milling (Jet/Hammer/etc.)

## FIG. 10

## FIG. 11

## FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62520138
- JP 2002083588 B
- US 2017098817 A
- EP 2034542 A
- US 9053871 B
- US 63332142
- US 58667017
- US 9287565 B
- US 20140377659

**Non-patent literature cited in the description**

- **YUPING WU.** Lithium Ion Batteries Fundamentals and Applications. CRC press, 2015
- **TR CROMPTON.** Battery Reference Book. Newness, 2000